# EUROPEAN PATENT APPLICATION

(11) **EP 3 239 945 A1**
(43) Date of publication of application: **01.11.2017**
(21) Application number: 17168385.7
(22) Date of filing: 27.04.2017
(51) Int. Cl.: G08B 13/196, G08G 1/04, G08G 1/16, G01B 11/25

(54) **VEHICLE SAFETY SYSTEM**

(30) Priority: 28.04.2016 TW 105113200
(71) Applicant: H.P.B Optoelectronic Co., Ltd., Taichung City 428 (TW)
(72) Inventor: Hsu, Hsuan-Yueh, 428 Taichung City (TW); Hsiao, Chun-Nan, 428 Taichung City (TW); Liaw, Jeng-Wei, 428 Taichung City (TW)
(74) Representative: Gee, Steven William

(57) **Abstract**

A vehicle safety system includes several image capturing units, an image processing unit, a control unit and a display unit, in which an environmental photography technique and a visual distance detection technique are integrated so as to detect a distance between a nearby object and the vehicle to warn the driver during moving or parking operation, and an automatic door detection technique is integrated to identify rear side objects prior to opening of a vehicle door so to prevent undesired accident from happening.

## Description

### CROSS-REFERENCE TO RELATED APPLICATION

This application claims the priority of Taiwanese patent application No. 105113200, filed on April 28, 2016, which is incorporated herewith by reference.

### BACKGROUND OF THE INVENTION

### 1. Field of the Invention

The present invention relates to a vehicle safety system, more particularly to a vehicle safety system, in which an environmental photography technique, a visual distance detection technique and an automatic door detection technique are integrated to provide safe driving of a vehicle.

### 2. The Prior Arts

Mobile carriers (or vehicles) are indispensable transportation tools for most of the people. Whether for sight seeing tour or transporting goods from one place to the other depend heavily on the mobile carriers. Many drivers due to unfamiliar with the environment traffic accidentally drive into a narrow road or dead lane, thereby causing difficulties for returning to an intended road. In the event that a large-sized vehicle needs to make a U-turn or backing in a heavily populated environment can encounter undesired accidents due to not fully understanding its actual status of the environment, bad weather and visual dead angle. In order to tackle these problems, surveillance systems or image capturing devices are mounted around a surrounding of a vehicle. Of course, the conventional image capturing system mounted on the vehicle still has many visual angles for monitoring the environment. Moreover, the anti-theft device utilized in a common vehicle usually generates an alarm sound only when the vehicle is vibrated or when the door is opened, thereby reminding the driver and those persons nearby the vehicle, which action can only deter the intruder. The conventional surveillance system or image capturing device cannot record immediate solicitation action for evidence except generating the alarm sound such that even if the vehicle is intruded or damaged by the theft, the owner cannot immediately reach the crime scene or the vehicle and take any necessary action. In other words, the theft cannot be brought to justice.

### SUMMARY OF THE INVENTION

A primary objective of the present invention is to provide a vehicle safety system, in which an environmental photography technique, a visual distance detection technique and an automatic door detection technique are integrated to provide safe driving of a vehicle. By utilizing AVMS (Around View Monitoring System) and VDD (Visual Distance Detection), a distance between the vehicle during moving or after parking, the ambient surrounding can be detected so as to generate an alarm signal to remind the vehicle status to the driver. A DOWS (Door Opening Warning System) can be integrated so that after parking the vehicle, the system can verify and sort out the types of the object at the rear side of the vehicle and detecting the environmental owing to active detection technology, thereby controlling opening action of the door so as to avoid collision of the door with an external object due to untimely opening of the door.

Another objective of the present invention is to provide a vehicle safety system, which includes a plurality of image capturing units adapted to be disposed around a surrounding of a vehicle, an image processing unit, a control unit, and a display unit. Each image capturing unit includes a light emitting module, an optical lens and a light sensitive element, wherein the light emitting module emits a light beam onto an object so as to display an optical patterning thereon, which varies in accordance with a distance between the object and the vehicle such that the optical lens captures an initial image of the object and the optical patterning in order to form a rendering on the light sensitive element. The image processing unit is coupled electrically with the plurality of image capturing units, includes a combined module, a distance detection module, a transmission module and a recognition module, wherein the combined module adjusts the initial image and the optical patterning into a plurality of adjusted images and are later converted into a plurality of bird-view images and are combined together to form a surrounding bird-view image, the distance detection module calculates a distance between the object and the vehicle based on variation of the adjusted images and the optical patterning, the transmission module communicates and transmits vehicle safety information through a wireless transmission protocol to a mobile communication device, the recognition module identifies and sorts out the types of the object from the adjusted images. The control unit is coupled electrically to the recognition module and a door lock of the vehicle in order to activate and de-activating the door lock depending on the sorted types of the object. The display unit is adapted to be disposed within the vehicle and is coupled electrically with the image processing unit, includes a display module and a warning module, wherein the display module displays the vehicle safety information while the warning module generates a warning signal upon the distance between the object and the vehicle is smaller than a threshold value.

In the abovementioned vehicle safety system, the light emitting module is selected from a group consisting of an LED (Light Emitting Diode), a laser device and an infrared device.

In the abovementioned vehicle safety system, the optical patterning is a pattern selected from a group consisting of a grid, a straight line or a row of regularly arranged dots.

In the abovementioned vehicle safety system, the optical lens is selected from a group consisting of a fish-eye lens, a wide angle lens and a standard lens.

In the abovementioned vehicle safety system, the light emitting module is selected from a group consisting of a CCD (Charge-coupled device) and a CMOS (Complementary Metal-Oxide Semiconductor).

In the abovementioned vehicle safety system, the vehicle safety information consists of the initial image, the adjusted images, the bird-view images, the surrounding bird-view image and the distance between the vehicle and the object.

In the abovementioned vehicle safety system, the warning signal is selected from a group consisting of a buzzing sound, a flashing light, a vibration and a combination of at least two of the former.

Because, in the abovementioned vehicle safety system, due to presence of the AVMS (Around View Monitoring System) and VDD (Visual Distance Detection), a distance between the vehicle during moving or after parking, the ambient surrounding can be detected so as to generate an alarm signal to remind the driver of the vehicle. A DOWS (Door Opening Warning System) can be integrated so that after parking the vehicle, the system can verify and sort out the types of the object at the rear side of the vehicle and detecting the environment owing to active detection technology, thereby controlling opening action of the door in order to avoid collision of the door with an external object due to untimely opening of the door. Moreover, in the vehicle safety system of the present invention, the image processing unit can convert an initial image of the surrounding object into the surrounding bird-view image while the light emitting module emits onto an target object to display the optical patterning thereon, which varies in accordance with a distance between the object and the vehicle, so as to effectively remind the driver the distance between the object and the vehicle such that during the parking operation, upon detection of an approaching person, the action is reminded to the driver, thereby preventing occurrence of accident. Due to presence of the optical lens at the rear side of the vehicle, it can capture the object at the rear side of the vehicle such that the recognition module can identify and sort out the types of the object so that if the types of the object being a man or a bicycle, the control unit does not activate the door lock. When no object is detected, the control unit activates the door lock and thus opening the vehicle door, thereby preventing occurrence of collision between the vehicle door and the approaching object. In addition, since an LED (Light Emitting Diode) or a laser device serves as the light emitting module to emit a light beam and an optical patterning, which can compensate the insufficient lighting during the night time and permitting the optical lens to detect the image detection performance. In other words, the vehicle safety system of the present invention can detect the surrounding images regardless of day and night. In the vehicle safety system of the present invention, since a transmission module communicates and transmits vehicle safety information through a wireless transmission protocol to a mobile communication device, in the event that a stranger is approaching toward or nearby the vehicle, the image capturing unit immediately captures the appearance of the approaching person and generates a warning signal to deter the intruder, thereby avoiding the theft from being happened.

### BRIEF DESCRIPTION OF THE DRAWINGS

The present invention will be apparent to those skilled in the art by reading the following detailed description of a preferred embodiment thereof, with reference to the attached drawings, in which:
Fig. 1 is a block diagram illustrating the elements constituting a vehicle safety system according to a first embodiment of the present invention;
Fig. 2 illustrates how the vehicle safety system of the present invention is installed within a vehicle;
Fig. 3 illustrates how a door opening warning system of the vehicle safety system of the present invention assists the door opening action to avoid accident caused thereby; and
Fig. 4 illustrates how a control unit of the vehicle safety system according to a second embodiment of the present invention assists the vehicle into an empty parking space.

### DETAILED DESCRIPTION OF THE PREFERRED EMBODIMENTS

The accompanying drawings are included to provide a further understanding of the invention, and are incorporated in and constitute a part of this specification. The drawings illustrate embodiments of the invention and, together with the description, serve to explain the principles of the invention.

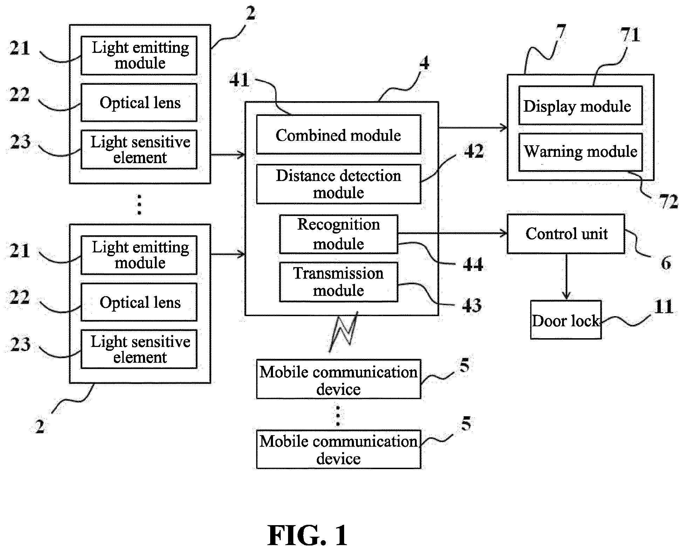

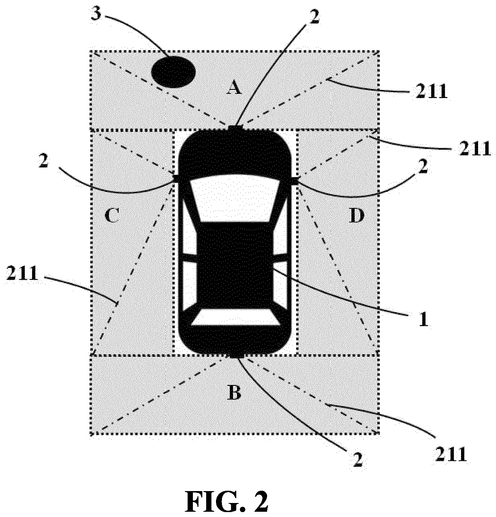

Referring to Figs. 1 and 2, wherein, Fig. 1 is a block diagram illustrating the elements constituting a vehicle safety system according to a first embodiment of the present invention and Fig. 2 illustrates the vehicle safety system of the present invention is installed within a vehicle 1.

As shown, the vehicle safety system of the present invention includes a plurality of image capturing units 2 adapted to be disposed around a surrounding of a vehicle 1, an image processing unit 4, a control unit 6 and a display unit 7. Each image capturing unit 2 includes a light emitting module 21, an optical lens 22 and a light sensitive element 23, wherein the light emitting module 21 emits a light beam 211 onto a nearby object 3 so as to display an optical patterning thereon, which varies in accordance with a distance between the object 3 and the vehicle 1 such that the optical lens 22 captures an initial image of the object 3 and the optical patterning in order to form a rendering on the light sensitive element 23. Preferably, the light emitting module 41 is selected from a group consisting of an LED (Light Emitting Diode), a laser device and an infrared device, the optical patterning is a pattern selected from a group consisting of a grid, a straight line or a regularly arranged dots while the optical lens 22 is selected from a group consisting of a fish-eye lens, a wide angle lens and a standard lens. Alternately, the light emitting module 22 can be selected from a group consisting of a CCD (Charge-coupled device) and a CMOS (Complementary Metal-Oxide Semiconductor). In one embodiment of the present invention, the light emitting module 21 is an LED, which emits the light beam 211 onto the nearby object 3 so as to display an optical patterning, such as grid, and the optical lens 22 is a fish-eye lens while the light-sensitive unit 23 is a CCD (Charge-coupled device). In real application, four optical lenses 22 are installed at the front, rear, left and right sides of the vehicle 1 so as to capture images of the four light sensitive elements 23, also set surrounding the vehicle 1, thereby capturing a front image A, a rear image B, a left image C and a right image D. Note the number of the optical lens 22 should not be limited only to the disclosed ones, but can depend on the length and viewing angles of the capturing images.

The image processing unit 4 is coupled electrically with the plurality of image capturing units 2, includes a combined module 41, a distance detection module 42, a transmission module 43 and a recognition module 44, wherein the combined module 41 adjusts the initial image and the optical patterning into a plurality of adjusted images and are later converted into a plurality of bird-view images and are combined together to form a surrounding bird-view image, the distance detection module 42 calculates a distance between the object 3 and the vehicle 1 based on variation of the adjusted images and the optical patterning, the transmission module 43 communicates and transmits vehicle safety information through a wireless transmission protocol to a mobile communication device 5, the recognition module 44 identifies and sorts out the types of the object 3 from the adjusted images. In one embodiment of the present invention, the combined module 41 adjusts the initial images of the object 3 captured by the image capturing units 2 into the adjusted images, are later converted into a plurality of bird-view images and are combined together to form a surround bird-view image, the feature of which was disclosed in the TW patent application No. 104144616, filed on December 31, 2015, entitled "Method and vehicle surveillance system". In addition, the distance detection module 42 calculates a distance between the object 3 and the vehicle 1 based on variation of the grid of the optical patterning, which feature was disclosed in disclosed in the TW patent application No. 104142613, filed on December 17, 2015, entitled "Image detection device for vehicle transportation". In one embodiment of the present invention, the distance detection module 42 determines the distance between the object 3 and the vehicle 1 based on the variance between the initial image of the object 3 and the grid of the optical patterning. It is to note that determination of the distance should not be limited only to the disclosed ones, other method, the distance detection module 42 can determine (based on the adjusted images, the bird-view images and the surround bird-view image) the distance between the object 3 and the vehicle 1. The initial image of the object 3 captured by the image capturing unit 2, the adjusted images by the image processing unit 4, the converted bird-view images are combined together to form the surrounding bird-view image or the calculated distance between the object 3 and the vehicle 1 or a combination of at least two (vehicle safety information) is transmitted by the transmission module 43 through a wireless transmission protocol to a mobile communication device 5 or the driver of the vehicle 1. After parking the vehicle, during the absence of the driver from the vehicle and in the event an intruder enters for theft, the vehicle safety system of the present invention can immediately capture an image of the intruder and transmits the same to the mobile communication device 5, thereby informing the vehicle owner or the concerned authority. Of course, the wireless transmission protocols include Bluetooth, Infrared, NFC (Near Field Communication), WLAN (Wireless Local Area Network), WiGig (Wireless Gigabit Alliance), Zigbee, Wireless USB, UWB (Ultra Wide Band) and Wi-Fi or a combination of at least former two. The mobile communication device is selected from a group consisting of a smart phone, ipad, smart lens, notebook computer and a display device having a display screen.

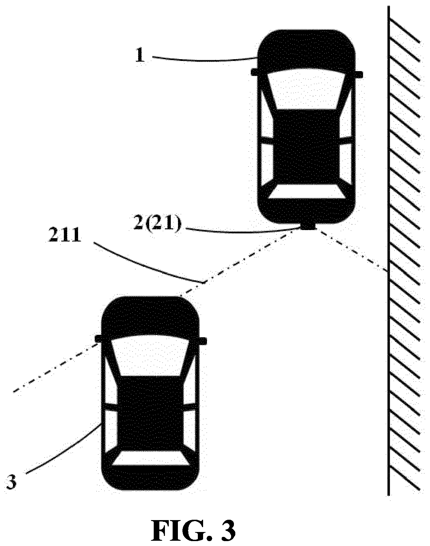

The control unit 6 is coupled electrically to the recognition module 44 and a door lock 11 of the vehicle 1 in order to activate and de-activating the door lock 11 depending on the sorted types of the object 3. Fig. 3 shows an operation of the vehicle safety system of the present invention, during or after parking and before opening of the vehicle door 11 (when the vehicle speed is at zero), the optical lens 22 at the rear end of the vehicle 1 captures an initial image of the nearby object 3 and transmits to the combined module 41, which converts into an adjusted image and transfers to the recognition module 44 for determining and analyzing the types of the object 3. If the analyzed object 3 is a vehicle or a bicycle, the control unit 6 controls the vehicle door 11 from being unlocked, thus the door cannot be opened even it is pushed outward by the occupying person. If the analyzed object 3 is a man or no people is present behind the vehicle 1, the control unit 6 permits unlocking of the vehicle door 11, thus the door can be opened by the driver or the occupying person. In other words, undesired collision between the vehicle door 11 and a nearby object is prevented.

The display unit 7 is adapted to be disposed within the vehicle 1 and is further coupled electrically with the image processing unit 4, includes a display module 71 and a warning module 72, wherein the display module 71 displays the vehicle safety information while the warning module 72 generates a warning signal upon the distance between the object 3 and the vehicle 1 is smaller than a threshold value. Preferably, the warning signal is selected from a group consisting of a buzzing sound, a flashing light, a vibration and a combination of at least two of the former. In one embodiment of the present invention, the vehicle safety information consists of the initial image, the adjusted images, the bird-view images, the surrounding bird-view image, the distance or a combination of at least two of the former. If four bird-view images are present as the objects 3, the display module 71 would display only the object 3 nearest to the vehicle 1 and if the distance between the object 3 and the vehicle 1 is less than a threshold value, the warning module 72 generates a warning signal to draw the attention of the driver.

In addition, in one embodiment of the present invention, the light emitting module is a flasher emitting flashing light with a flicker frequency equivalent to a frame rate captured by the optical lens 22 such that the distance detection module 42 can detect a variance between the front and rear images captured by the optical lenses 22 so as to determine variation of the optical patterning. The optical lens 22 captures the optical patterning of the object 3 during flashing of the light emitting module 21 for the first time and again the optical patterning of the object 3 for the second time while the light emitting module does not flash. After which, the distance detection module 42 determines and retains the varied optical patterning from the former two optical patterning. In other words, the variation of optical patterning can be definitely determined.

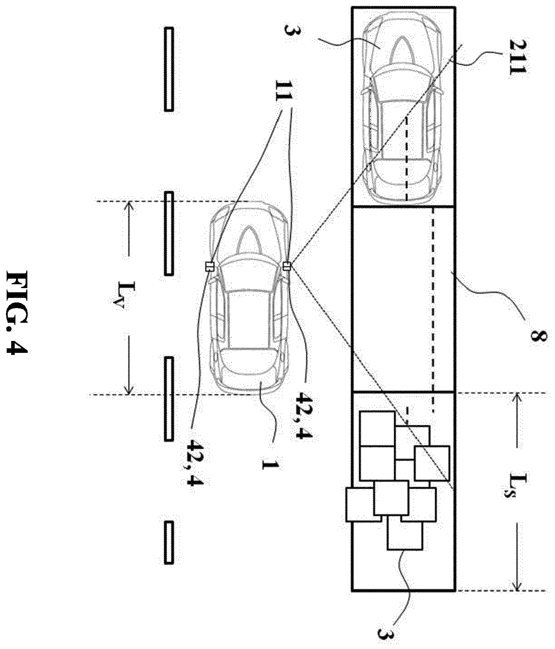

Fig. 4 illustrates how a control unit of the vehicle safety system according to a second embodiment of the present invention assists the vehicle into an empty parking space. As illustrated, upon detecting an empty parking space 8 at one side of the road by the vehicle safety system of the present invention, the distance diction module 42 of the image processing unit 4 calculates through an optical patterning of the light beam 211 a varied length L_{S} (since portions of two objects 3 are not within the radiating range of the light beam 211 and excluding the other object rather than the two objects 3). If the length L_{S} is greater the actual length L_{V} of the vehicle 1, it is determined that a parking space 8 is available between the two objects 3 (two vehicles) to permit parking of the vehicle 1 at the parking space 8.

As explained above, the vehicle safety system of the present invention can overcome the prior art disadvantages and the distinct features have never been disclosed in prior art publication as such should be allowed for a patent.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A vehicle safety system comprising:
a plurality of image capturing units adapted to be disposed around a surrounding of a vehicle, each image capturing unit including a light emitting module, an optical lens and a light sensitive element, wherein said light emitting module emits a light beam onto an object so as to display an optical patterning thereon, which varies in accordance with a distance between the object and the vehicle such that said optical lens captures an initial image of the object and said optical patterning in order to form a rendering on said light sensitive element;
an image processing unit coupled electrically with said plurality of image capturing units, including a combined module, a distance detection module, a transmission module and a recognition module, wherein said combined module adjusts said initial image into a plurality of adjusted images and are later converted into a plurality of bird-view images and are combined together to form a surrounding bird-view image, said distance detection module calculating a distance between said object and said vehicle based on variation of said adjusted images and said optical patterning, said transmission module communicating and transmitting vehicle safety information through a wireless transmission protocol to a mobile communication device, said recognition module identifying and sorting out the types of the object from said adjusted images;
a control unit coupled electrically to said recognition module and a door lock of said vehicle in order to activate and de-activating said door lock depending on said sorted types of the object; and
a display unit adapted to be disposed within said vehicle and coupled electrically with said image processing unit, including a display module and a warning module, wherein said display module displays said vehicle safety information while said warning module generates a warning signal upon the distance between the object and the vehicle is smaller than a threshold value.

2. The vehicle safety system according to claim 1, wherein said light emitting module is selected from a group consisting of an LED (Light Emitting Diode), a laser device and an infrared device.

3. The vehicle safety system according to claim 1, wherein said optical patterning is a pattern selected from a group consisting of a grid, a straight line and a regularly arranged dots.

4. The vehicle safety system according to claim 1, wherein said optical lens is selected from a group consisting of a fish-eye lens, a wide angle lens and a standard lens.

5. The vehicle safety system according to claim 1, wherein said light emitting module is selected from a group consisting of a CCD (Charge-coupled device) and a CMOS (Complementary Metal-Oxide Semiconductor).

6. The vehicle safety system according to claim 1, wherein said vehicle safety information consists of said initial image, said adjusted images, said bird-view images, said surrounding bird-view image and said distance.

7. The vehicle safety system according to claim 1, wherein said warning signal is selected from a group consisting of a buzzing sound, a flashing light, a vibration and a combination of at least two of the former.

8. The vehicle safety system according to claim 1, wherein said light emitting module is a flasher emitting flashing light with a flicker frequency equivalent to a frame rate captured by said optical lens.

9. The vehicle safety system according to claim 8, wherein said distance detection module further detects a variance between front and rear images captured by said optical lens to determine a variation of said optical patterning.
